(19) Europäisches Patentamt
European Patent Office
Office européen des brevets

(11) EP 4 063 439 B1

(12) **EUROPEAN PATENT SPECIFICATION**

(45) Date of publication and mention of the grant of the patent:
**31.01.2024 Bulletin 2024/05**

(21) Application number: **21189914.1**

(22) Date of filing: **05.08.2021**

(51) International Patent Classification (IPC):
***C08J 5/18*** *(2006.01)* ***C08G 73/10*** *(2006.01)*
***H01M 50/403*** *(2021.01)* ***C09D 179/08*** *(2006.01)*
***H01M 50/414*** *(2021.01)* ***H01M 50/494*** *(2021.01)*
*H01M 50/443* *(2021.01)*

(52) Cooperative Patent Classification (CPC):
**C08J 5/18; C08G 73/1007; C08G 73/1032; C08G 73/1042; C08G 73/105; C09D 179/08; H01M 50/403; H01M 50/414; H01M 50/494;**
C08J 2379/08; H01M 50/443

# (54) POLYIMIDE PRECURSOR FILM AND METHOD FOR PRODUCING POLYIMIDE FILM

POLYIMID-VORLÄUFERFOLIE UND VERFAHREN ZUR HERSTELLUNG EINER POLYIMID-FOLIE

FILM PRÉCURSEUR DE POLYIMIDE ET PROCÉDÉ DE PRODUCTION DE FILM DE POLYIMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2021 JP 2021054282**

(43) Date of publication of application:
**28.09.2022 Bulletin 2022/39**

(73) Proprietor: **Fujifilm Business Innovation Corp.**
**Tokyo (JP)**

(72) Inventors:
- **OKUBO, Tomoyo**
  **Minamiashigara-shi (JP)**
- **IWANAGA, Takeshi**
  **Minamiashigara-shi (JP)**
- **HIROSE, Hidekazu**
  **Minamiashigara-shi (JP)**
- **NAKADA, Kosuke**
  **Minamiashigara-shi (JP)**
- **SUGAHARA, Hajime**
  **Minamiashigara-shi (JP)**
- **SEITOKU, Shigeru**
  **Minamiashigara-shi (JP)**

(74) Representative: **Haseltine Lake Kempner LLP**
**Bürkleinstrasse 10**
**80538 München (DE)**

(56) References cited:
**CN-A- 112 111 219** **JP-A- 2002 283 369**
**JP-A- 2003 236 861** **JP-A- 2006 137 884**
**JP-A- 2006 327 022** **JP-A- 2009 006 542**
**US-A1- 2006 127 686** **US-A1- 2012 292 800**
**US-A1- 2018 244 886** **US-A1- 2019 225 754**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

BACKGROUND

Technical Field

The present invention relates to a polyimide precursor film and a method for producing a polyimide film.

Related Art

JP-A-2009-275090 proposes "a method for producing a polyimide film for display, including coating and heating a solution of polyamic acid obtained by reacting 3,3',4,4'-biphenyltetracarboxylic dianhydride and trans-1,4-diaminocyclohexane onto a support, then peeling the film from the support, fixing the circumference of the film, and further performing a heat treatment".

JP-A-2018-58923 proposes "a polyimide film, in which both a linear expansion coefficient $\alpha$MD in a film transport direction (MD) and a linear expansion coefficient $\alpha$TD in a width direction (TD) are 7 ppm/°C or less, and an anisotropy index AI value represented by the equation: AI=(VMAX^2-VMIN^2)/(VMAX^2+VMIN^2) (in the equation, VMAX^2 indicates the square of the maximum value of the pulse propagation velocity, and VMIN^2 indicates the square of the minimum value of the pulse propagation velocity) when the propagation speed V of the ultrasonic pulse is measured is 15 or less over the entire width".

JP-A-2015-10107 proposes "a polyimide film, in which a film formation width is 1 m or more, an orientation coefficient AI (45, 135) value expressed by the equation: AI(45,135)=|(V45^2-V135^2)/((V45^2+V135^2)/2)×100| at a film orientation angle ($\theta$) of 45° and 135° with respect to the machine transport direction (MD) of the film is 12 or less over the entire width, a dimensional change rate before and after the etching treatment for a flexible metal laminate in the diagonal (45°, 135°) direction in the entire width is -0.05% to 0.05%, and a thermoplastic polyimide layer having a thickness of 0.5 $\mu$m to 20 $\mu$m is provided on at least one side".

JP-A-2012-25967 proposes "an organic insulating film that is continuously produced and that satisfies the following (1) to (3) in the entire width of the film: (1) the MOR-c value of the film is 1.05 or more and 5.0 or less, (2) a molecular chain principal axis orientation angle is -30 degrees to 30 degrees with respect to MD direction, and (3) the difference between the maximum and minimum film MOR-c values is 1.0 or less".

JP-A-2012-158149 proposes "a method for producing a polyimide-based multilayer film having plural resin layers containing a polyimide resin, including (1) a multi-layer liquid film forming step of using plural types of resin solutions containing a polyimide resin or a precursor thereof and forming a multilayer liquid film formed by laminating liquid films composed of respective resin solutions on a support using a multi-layer coextrusion die; and (2) a gel film forming step of forming the obtained multi-layer liquid film as a self-supporting multi-layer gel film, in which among the plural liquid films constituting the polyimide-based multi-layer film, the outermost liquid film in contact with the support contains an imidization catalyst and contains no chemical dehydrating agents, and the adhesion strength between the multi-layer gel film formed on the support and the support is 0.2 kg/20 cm to 2.4 kg/20 cm".

JP-A-2009-006542 relates to a method of producing a polyimide film which is prepared by applying a polyamic acid solution to a self-supporting film.

JP-A-2006-327022 relates to the provision of a manufacturing apparatus for manufacturing polyimide film which comprises a drying section wherein a polyimide precursor solution is coated on a support and dried to make a green film, and an imidization section where the green film is heat treated.

SUMMARY

An object of the present invention is to provide a polyimide precursor film that is hard to break and has a self-supporting property, as compared with a case where the total content of a solvent containing water and a solvent other than water is less than 5 mass% or more than 40 mass%, or a case where the mass ratio (water/solvent other than water) of water to the solvent other than water is more than 2.5.

The present invention is defined in and by the appended claims.

According to a first aspect of the present invention, there is provided a polyimide precursor film containing:

a polyimide precursor, in which
a total content of a solvent containing water and a solvent other than water in the polyimide precursor film is 5 mass% or more and 40 mass% or less and wherein the presence of water is optional, and
a mass ratio of water to the solvent other than water in the polyimide precursor film is 0 or more and 2.5 or less, and wherein the solvent other than water contains a water-insoluble solvent and wherein the water-insoluble solvent

is at least one selected from the group consisting of a secondary amine compound and a tertiary amine compound, and wherein the secondary amine compound and the tertiary amine compound are at least one selected from the group consisting of imidazoles represented by the following general formula (IM) and morpholines represented by the following general formula (MO),

(IM)

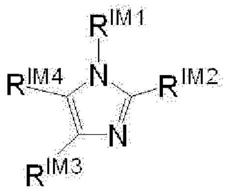

(MO)

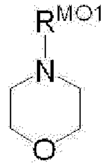

wherein, in the general formula (IM), $R^{IM1}$, $R^{IM2}$, $R^{IM3}$, and $R^{IM4}$ each independently represent a hydrogen atom or an alkyl group having 1 or more and 8 or less carbon atoms, and
in the general formula (MO), $R^{MO1}$ represents a hydrogen atom or an alkyl group having 1 or more and 8 or less carbon atoms,
further comprising:

particles, wherein
the particles have a volume average particle diameter which is measured in accordance with the description of 0.1 μm or more and 1 μm or less, and
a content of the particles is 30 mass% or more and 80 mass% or less with respect to a total amount of the polyimide precursor and the particles,
and wherein the particles are resin particles.

Accordingly, there is provided a polyimide precursor film that is hard to break and has a self-supporting property, as compared with a case where the total content of the solvent containing water and a solvent other than water in the polyimide precursor film is less than 5 mass% or more than 40 mass%, or a case where the mass ratio of water to the solvent other than water in the polyimide precursor film is more than 2.5. Accordingly, there is provided a polyimide precursor film that is hard to break and has a self-supporting property, as compared with a case where the solvent other than water is only a water-soluble solvent.
Accordingly, there is provided a polyimide precursor film that is hard to break and has a self-supporting property, as compared with a case where the water-insoluble solvent is a primary amine compound.
Accordingly, there is provided a polyimide precursor film that is hard to break and has a self-supporting property even when particles having a volume average particle diameter of 0.1 μm or more and 1 μm or less are contained in an amount of 30 mass% or more and 80 mass% or less with respect to the total amount of the polyimide precursor and the particles, as compared with a case where the total content of the solvent containing water and a solvent other than water in the polyimide precursor film is less than 5 mass% or more than 40 mass%, or a case where the mass ratio of water to the solvent other than water in the polyimide precursor film is more than 2.5.
There is also described herein but not claimed a polyimide precursor film containing: a polyimide precursor, wherein

a total content of a solvent containing water and a solvent other than water in the polyimide precursor film is 5 mass% or more and 40 mass% or less, and
the polyimide precursor film has a tensile strength of 5 kPa or more and 40 kPa or less.

The total content of the solvent containing water and a solvent other than water in the polyimide precursor film may be 8 mass% or more and 33 mass% or less.
Accordingly, there is provided a polyimide precursor film that is hard to break and has a self-supporting property, as compared with a case where the total content of the solvent containing water and a solvent other than water in the polyimide precursor film is less than 8 mass% or more than 33 mass%.
The mass ratio of water to the solvent other than water in the polyimide precursor film may be 0 or more and 1 or less.
Accordingly, there is provided a polyimide precursor film that is hard to break and has a self-supporting property, as compared with a case where the mass ratio of water to the solvent other than water in the polyimide precursor film is more than 1.0.

According to a second aspect of the present invention there is provided a method for producing a polyimide film, including: heating the polyimide precursor film according to the first aspect of the present invention to imidize the polyimide precursor to form the polyimide film.

The method for producing the polyimide film may further comprise removing the particles.

Accordingly, there is provided a polyimide precursor film from which a polyimide precursor film that is hard to break and has self-supporting properties is obtained, as compared with a case where the total content of the solvent containing water and a solvent other than water in the polyimide precursor film is less than 5 mass% or more than 40 mass%, or a case where a polyimide precursor film having a mass ratio of water to the solvent other than water in the polyimide precursor film of more than 2.5 is applied.

## BRIEF DESCRIPTION OF THE DRAWINGS

Exemplary embodiment(s) of the present invention will be described in detail based on the following figures, wherein:

Fig. 1 is a schematic diagram showing a configuration of a porous polyimide film according to the present exemplary embodiment;
Fig. 2 is a schematic partial cross-sectional view showing an example of a lithium ion secondary battery provided with the porous polyimide film according to the present exemplary embodiment as a separator for a lithium ion secondary battery; and
Fig. 3 is a schematic partial cross-sectional view showing an example of an all-solid-state battery provided with the porous polyimide film according to the present exemplary embodiment.

## DETAILED DESCRIPTION

Hereinafter, an exemplary embodiment as an example of the present invention will be described. The description and Examples illustrate the exemplary embodiment.

Each component may contain plural corresponding substances.

In a case of referring to an amount of each component in a composition, when there are plural substances corresponding to each component in the composition, unless otherwise specified, it refers to a total amount of the plural substances present in the composition.

The term "film" is a concept that includes not only what is generally called "film" but also what is generally called "sheet".

### <Polyimide Precursor Film>

#### -First Exemplary Embodiment-

A polyimide precursor film according to the first aspect of the invention contains a polyimide precursor, in which a total content of a solvent containing water and a solvent other than water in the polyimide precursor film is 5 mass% or more and 40 mass% or less, and a mass ratio of the water to the solvent other than water is 0 or more and 2.5 or less.

With the above configuration, the polyimide precursor film according to the first aspect of the invention becomes a polyimide precursor film that is hard to break and has a self-supporting property. It is presumed that the reason is that the polyimide precursor film has flexibility due to an appropriate solvent content and a solvent other than water.

#### -Second Exemplary Embodiment-

A polyimide precursor film according to a second embodiment which is not claimed contains a polyimide precursor, in which a total content of a solvent containing water and a solvent other than water in the polyimide precursor film is 5 mass% or more and 40 mass% or less, and the polyimide precursor film has a tensile strength of 5 kPa or more and 40 kPa or less.

With the above configuration, the polyimide precursor film according to the second embodiment also becomes a polyimide precursor film that is hard to break and has a self-supporting property.

Hereinafter, the polyimide precursor film corresponding to any of the polyimide precursor films according to the first aspect of the invention or second embodiment (hereinafter, also referred to as "polyimide precursor film according to the present exemplary embodiment") will be described in detail.

The polyimide precursor film according to the present exemplary embodiment contains a polyimide precursor and a solvent.

Specifically, the polyimide precursor film according to the present exemplary embodiment is a dried film obtained by drying a coating film of a polyimide precursor solution containing a polyimide precursor and a solvent containing water and a solvent other than water.

In the process of producing the polyimide film, the polyimide precursor film may be peeled off from the coated substrate, wound once in a roll shape, and then imidized.

Thus, in producing the polyimide film, when the polyimide precursor film is peeled off from the coated substrate or wound into a roll shape, if the film is hard to break and has a self-supporting property, a polyimide film having high film handleability and prevented breakage can be obtained.

Here, "the film has a self-supporting property" indicates that the film has a self-supporting property when the film itself can be peeled off from a solid substrate while maintaining the shape thereof after film formation on the solid substrate. Specifically, for example, when one end of a film having a length of 150 mm and a width of 100 mm square and a thickness of 0.02 mm or more and 0.1 mm or less is gripped, the film does not bend and has a self-supporting property.

(Polyimide Precursor)

The polyimide precursor is a resin (that is, polyimide precursor) having a repeating unit represented by the general formula (I).

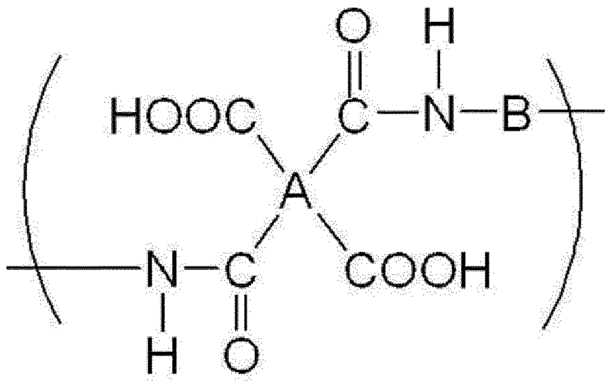

(I)

In the general formula (I), A represents a tetravalent organic group and B represents a divalent organic group.

Here, in the general formula (I), the tetravalent organic group represented by A is a residue obtained by removing four carboxyl groups from a tetracarboxylic dianhydride as a raw material.

On the other hand, the divalent organic group represented by B is a residue obtained by removing two amino groups from a diamine compound as a raw material.

That is, the polyimide precursor having a repeating unit represented by the general formula (I) is a polymer of a tetracarboxylic dianhydride and a diamine compound.

Examples of the tetracarboxylic dianhydride include both aromatic and aliphatic tetracarboxylic dianhydrides, and the aromatic tetracarboxylic dianhydride is preferred. That is, in the general formula (I), the tetravalent organic group represented by A is preferably an aromatic organic group.

Examples of the aromatic tetracarboxylic dianhydride include pyromellitic dianhydride, 3,3',4,4'-benzophenone tetracarboxylic dianhydride, 3,3',4,4'-biphenylsulfonetetracarboxylic dianhydride, 1,4,5,8-naphthalenetetracarboxylic dianhydride, 2,3,6,7-naphthalenetetracarboxylic dianhydride, 3,3',4,4'-biphenyl ether tetracarboxylic dianhydride, 3,3',4,4'-dimethyldiphenylsilanetetracarboxylic dianhydride, 3,3',4,4'-tetraphenylsilanetetracarboxylic dianhydride, 1,2,3,4-frantetracarboxylic dianhydride, 4,4'-bis(3,4-dicarboxyphenoxy)diphenylsulfide dianhydride, 4,4'-bis(3,4-dicarboxyphenoxy)diphenylsulfone dianhydride, 4,4'-bis(3,4-dicarboxyphenoxy)diphenylpropane dianhydride, 3,3',4,4'-perfluoroisopropyridene diphthalic dianhydride, 3,3',4,4'-biphenyltetracarboxylic dianhydride, 2,3,3',4'-biphenyltetracarboxylic dianhydride, bis(phthalic acid) phenylphosphine oxide dianhydride, p-phenylene-bis(triphenylphthalic acid)dianhydride, m-phenylene-bis(triphenylphthalic acid)dianhydride, bis(triphenylphthalic acid)-4,4'-diphenyl ether dianhydride, and bis(triphenylphthalic acid)-4,4'-diphenylmethane dianhydride.

Examples of the aliphatic tetracarboxylic dianhydride include: aliphatic or alicyclic tetracarboxylic dianhydrides

such as butanetetracarboxylic dianhydride, 1,2,3,4-cyclobutanetetracarboxylic dianhydride, 1,3-dimethyl-1,2,3,4-cyclobutanetetracarboxylic dianhydride, 1,2,3,4-cyclopentanetetracarboxylic dianhydride, 2,3,5-tricarboxycyclopentyl acetate dianhydride, 3,5,6-tricarboxynorbonan-2-acetate dianhydride, 2,3,4,5-tetrahydrofuran tetracarboxylic dianhydride, 5-(2,5-dioxotetrahydrofuryl)-3-methyl-3-cyclohexene-1,2-dicarboxylic dianhydride, and bicyclo[2,2,2]-octo-7-ene-2,3,5,6-tetracarboxylic dianhydride; and aliphatic tetracarboxylic dianhydrides having an aromatic ring such as 1,3,3a,4,5,9b-hexahydro-5-(tetrahydro 2,5-dioxo-3-franyl)-naphtho[1,2-c]furan-1,3-dione, 1,3,3a,4,5,9b-hexahydro-5-methyl-5-(tetrahydro-2,5-dioxo-3-franyl)-naphtho[1,2-c]furan-1,3-dione, and 1,3,3a,4,5,9b-hexahydro-8-methyl-5-(tetrahydro-2,5-dioxo-3-franyl)-naphtho[1,2-c]furan-1,3-dione.

Among these, the tetracarboxylic dianhydride is preferably an aromatic tetracarboxylic dianhydride. Specifically, preferred are pyromellitic dianhydride, 3,3',4,4'-biphenyltetracarboxylic dianhydride, 2,3,3',4'-biphenyltetracarboxylic dianhydride, 3,3',4,4'-biphenyl ether tetracarboxylic dianhydride, and 3,3',4,4'-benzophenone tetracarboxylic dianhydride, more preferred are pyromellitic dianhydride, 3,3',4,4'-biphenyltetracarboxylic dianhydride, and 3,3',4,4'-benzophenone tetracarboxylic dianhydride, and particularly preferred is 3,3',4,4'-biphenyltetracarboxylic dianhydride.

The tetracarboxylic dianhydride may be used alone or in combination of two or more thereof.

When two or more tetracarboxylic dianhydrides are used in combination, aromatic tetracarboxylic dianhydrides or aliphatic tetracarboxylic dianhydrides may be used in combination, or an aromatic tetracarboxylic dianhydride and an aliphatic tetracarboxylic dianhydride may be used in combination.

On the other hand, the diamine compound is a diamine compound having two amino groups in the molecular structure thereof. Examples of the diamine compound include both aromatic and aliphatic diamine compounds, and the aromatic diamine compound is preferred. That is, in the general formula (I), the divalent organic group represented by B is preferably an aromatic organic group.

Examples of the diamine compound include: aromatic diamines such as p-phenylenediamine, m-phenylenediamine, 4,4'-diaminodiphenylmethane, 4,4'-diaminodiphenylethane, 4,4'-diaminodiphenyl ether, 4,4'-diaminodiphenyl sulfide, 4,4'-diaminodiphenyl sulfone, 1,5-diaminonaphthalene, 3,3-dimethyl-4,4'-diaminobiphenyl, 5-amino-1-(4'-aminophenyl)-1,3,3-trimethylindane, 6-amino-1- (4'-aminophenyl)-1,3,3-trimethylindane, 4,4'-diaminobenzanilide, 3,5-diamino-3'-trifluoromethylbenzanilide, 3,5-diamino-4'-trifluoromethylbenzanilide, 3,4'-diaminodiphenyl ether, 2,7-diaminofluorene, 2,2-bis(4-aminophenyl)hexafluoropropane, 4,4'-methylene-bis (2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 4,4'-diamino-2,2'-bis(trifluoromethyl)biphenyl, 2,2-bis[4-(4-aminophenoxy) phenyl] propane, 2,2-bis[4-(4-aminophenoxy) phenyl]hexafluoropropane, 1,4-bis (4-aminophenoxy)benzene, 4,4'-bis(4-aminophenoxy)-biphenyl, 1,3'-bis (4-aminophenoxy) benzene, 9,9-bis(4-aminophenyl)fluorene, 4,4'-(p-phenylene isopropylidene)bisaniline, 4,4'-(m-phenylene isopropylidene)bisaniline, 2,2'-bis[4-(4-amino-2-trifluoromethylphenoxy)phenyl]hexafluoropropane, and 4,4'-bis[4-(4-amino-2-trifluoromethyl)phenoxy]-octafluorobiphenyl; aromatic diamines having two amino groups bonded to an aromatic ring and a hetero atom other than the nitrogen atom of the amino groups, such as diaminotetraphenylthiophene; and aliphatic diamines and alicyclic diamines such as 1,1-methaxylylenediamine, 1,3-propane diamine, tetramethylenediamine, pentamethylenediamine, octamethylenediamine, nonamethylenediamine, 4,4-diaminoheptamethylenediamine, 1,4-diaminocyclohexane, isophorone diamine, tetrahydrodicyclopentadienylenediamine, hexahydro-4,7-methanoindanylene dimethylenediamine, tricyclo[6,2,1,$0^{2.7}$]-undecylenic dimethyldiamine, and 4,4'-methylenebis(cyclohexylamine).

Among these, the diamine compound is preferably an aromatic diamine compound. Specifically, preferred are p-phenylenediamine, m-phenylenediamine, 4,4'-diaminodiphenylmethane, 4,4'-diaminodiphenyl ether, 3,4'-diaminodiphenyl ether, 4,4'-diaminodiphenyl sulfide, and 4,4'-diaminodiphenyl sulfone, and particularly preferred are 4,4'-diaminodiphenyl ether and p-phenylenediamine.

The diamine compound may be used alone or in combination of two or more thereof. When two or more diamine compounds are used in combination, aromatic diamine compounds or aliphatic diamine compounds may be used in combination, or an aromatic diamine compound and an aliphatic diamine compound may be used in combination.

The weight average molecular weight of the polyimide precursor is preferably 5,000 or more and 300,000 or less, and more preferably 10,000 or more and 150,000 or less.

The weight average molecular weight of the polyimide precursor is measured by a gel permeation chromatography (GPC) method under the following measurement conditions.

· Column: Tosoh TSKgel$\alpha$-M (7.8 mm I.D $\times$ 30 cm)
· Eluent: DMF (dimethylformamide)/30 mM LiBr/60 mM phosphoric acid
· Flow rate: 0.6 mL/min
· Injection amount: 60 $\mu$L
· Detector: RI (Differential refractometer)

The content of the polyimide precursor is preferably 5 mass% or more and 65 mass% or less, and more preferably 10 mass% or more and 40 mass% or less, with respect to the polyimide precursor film.

(Solvent)

The solvent contains water (optionally) and a solvent other than water.
The total content of the solvent containing water and the solvent other than water in the polyimide precursor film is 5 mass% or more and 40 mass% or less and the presence of water is optional.
From the viewpoints of improving the breakage resistance and improving the self-supporting property, the total content of the solvent containing water and the solvent other than water in the polyimide precursor film is preferably 8 mass% or more and 33 mass% or less, and more preferably 10 mass% or more and 30 mass% or less.
The mass ratio (a mass of water/a mass of solvent other than water) of water to the solvent other than water is 0 or more and 2.5 or less.
From the viewpoints of improving the breakage resistance and improving the self-supporting property, the mass ratio (a mass of water/ a mass of solvent other than water) of water to the solvent other than water is preferably 0 or more and 2.0 or less, and more preferably 0 or more and 1.0 or less.
Here, the total content of the solvent containing water and the solvent other than water in the polyimide precursor film and the mass ratio of water to the solvent other than water can be adjusted by the drying temperature and the drying time of the coating film of the polyimide precursor solution, and the type and amount of the solvent other than water.

-Water-

Examples of water include distilled water, ion-exchanged water, ultrafiltered water, and pure water.

-Solvent Other Than Water-

Examples of the solvent other than water include a water-insoluble solvent and a water-soluble solvent, provided that the solvent other than water contains a water-insoluble solvent.
Here, the "water-insoluble" means that the target substance dissolves in water in an amount of less than 1 mass% at 25°C. The "water-soluble" means that the target substance dissolves in water in an amount of 1 mass% or more at 25°C.
From the viewpoints of improving the breakage resistance and improving the self-supporting property, the solvent other than water is preferably a water-insoluble solvent.
Here, from the viewpoints of improving the breakage resistance and improving the self-supporting property, the ratio of the water-insoluble solvent in the solvent other than water is preferably 50 mass% or more, more preferably 70 mass% or more, and still more preferably 90 mass% or more.

· Water-insoluble solvent

Examples of the water-insoluble solvent include an organic amine compound.
From the viewpoints of improving the breakage resistance and improving the self-supporting property, the water-insoluble solvent is preferably an organic amine compound.
When the organic amine compound is contained in the polyimide precursor film, the hydrogen bond with the polyimide precursor makes it possible to improve the breakage resistance and the self-supporting property of the polyimide precursor film.
The organic amine compound is a compound that amine-chlorides a polyimide precursor (specifically a carboxy group of the polyimide precursor) to increase the solubility in the aqueous solvent and that also functions as an imidization accelerator. Specifically, the organic amine compound is preferably an amine compound having a molecular weight of 170 or less. The organic amine compound may be a compound excluding a diamine which is a raw material of the polyimide precursor.
According to the invention, the organic amine compound is at least one selected from a secondary amine compound and a tertiary amine compound and particularly preferably a tertiary amine compound. When a tertiary amine compound or a secondary amine compound (in particular, a tertiary amine compound) is applied as the organic amine compound, the polyimide precursor has a high hydrogen bonding property, and the breakage resistance and the self-supporting property of the polyimide precursor film are improved.
Examples of an organic amine compound also include a polyvalent amine compound having a valency of 2 or more in addition to a monovalent amine compound. When a polyvalent amine compound having a valency of 2 or more is applied, a pseudo-cross-linked structure is easily formed between molecules of the polyimide precursor, and the breakage resistance and the self-supporting property of the polyimide precursor film are improved.
Examples of the secondary amine compound include morpholine.
Examples of the tertiary amine compound include N-methylmorpholine, N-ethylmorpholine, 1,2-dimethylimidazole, and 2-ethyl-4-methylimidazole.

From the viewpoints of pot life and film thickness uniformity of the polyimide precursor film, a tertiary amine compound is preferred. In this regard, at least one selected from the group consisting of N-methylmorpholine, N-ethylmorpholine, 1,2-dimethylimidazole, 2-ethyl-4-methylimidazole is more preferred.

Here, from the viewpoint of film-forming property, the organic amine compound is also preferably an amine compound (in particular, a tertiary amine compound) having a heterocyclic structure containing nitrogen. Examples of the amine compound having a heterocyclic structure containing nitrogen (hereinafter referred to as "nitrogen-containing heterocyclic amine compound") include imidazoles (amine compounds having an imidazole skeleton), morpholines (amine compounds having a morpholine skeleton).

From the viewpoint of film-forming property, the organic amine compound is at least one selected from the group consisting of morpholines and imidazoles.

According to the invention, from the viewpoints of improving the breakage resistance and improving the self-supporting property, the organic amine compound is at least one selected from the group consisting of imidazoles represented by the following general formula (IM) and morpholines represented by the following general formula (MO).

The imidazoles represented by the general formula (IM) and the morpholines represented by the general formula (MO) have a high hydrogen bonding property with the polyimide precursor. Therefore, the breakage resistance and the self-supporting property of the polyimide precursor film can be improved.

(IM)

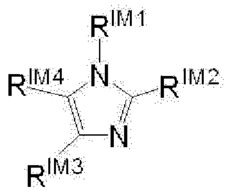

(MO)

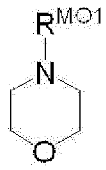

In the general formula (IM), $R^{IM1}$, $R^{IM2}$, $R^{IM3}$, and $R^{IM4}$ each independently represent a hydrogen atom or an alkyl group having 1 or more and 8 or less carbon atoms.

In the general formula (MO), $R^{MO1}$ represents a hydrogen atom or an alkyl group having 1 or more and 8 or less carbon atoms.

In the general formula (IM) and the general formula (MO), the alkyl group represented by $R^{IM1}$ to $R^{IM4}$ and $R^{MO1}$ may be linear or branched.

The alkyl group represented by $R^{IM1}$ to $R^{IM4}$ and $R^{MO1}$ is preferably an alkyl group having 1 or more and 6 or less carbon atoms, and more preferably an alkyl group having 1 or more and 4 or less carbon atoms.

The organic amine compound is preferably a compound having a boiling point of 60°C or higher (more preferably 60°C or higher and 200°C or lower, and still more preferably 70°C or higher and 150°C or lower). When the boiling point of the organic amine compound is 60°C or higher, during the storage of the polyimide precursor film, the volatilization of the organic amine compound from the polyimide precursor film is prevented, and the decrease in breakage resistance and the decrease in self-supporting property are easily prevented.

The above organic amine compounds may be used alone or in combination of two or more thereof.

· Water-soluble solvent

Examples of the water-soluble solvent include a water-soluble ether-based solvent, a water-soluble ketone-based solvent, and a water-soluble alcohol-based solvent.

The water-soluble ether-based solvent is a water-soluble solvent having an ether bond in one molecule.

Examples of the water-soluble ether-based solvent include tetrahydrofuran (THF), dioxane, trioxane, 1,2-dimethoxyethane, diethylene glycol dimethyl ether, and diethylene glycol diethyl ether. Among these, the water-soluble ether-based solvent is preferably tetrahydrofuran and dioxane.

The water-soluble ketone-based solvent is a water-soluble solvent having a ketone group in one molecule. Examples of the water-soluble ketone-based solvent include acetone, methyl ethyl ketone, and cyclohexanone. Among these, the water-soluble ketone-based solvent is preferably acetone.

The water-soluble alcohol-based solvent is a water-soluble solvent having an alcoholic hydroxy group in one molecule. Examples of the water-soluble alcohol solvent include methanol, ethanol, 1-propanol, 2-propanol, tert-butyl alcohol, ethylene glycol, ethylene glycol monoalkyl ether, propylene glycol, propylene glycol monoalkyl ether, diethylene glycol, diethylene glycol monoalkyl ether, 1,2-propanediol, 1,3-propanediol, 1,3-butanediol, 1,4-butanediol, 2,3-butanediol, 1,5-pentanediol, 2-butene-1,4-diol, 2-methyl-2,4-pentanediol, glycerin, 2-ethyl-2-hydroxymethyl-1,3-propanediol,

and 1,2,6-hexanetriol. Among these, the water-soluble alcohol solvent is preferably methanol, ethanol, 2-propanol, ethylene glycol, ethylene glycol monoalkyl ether, propylene glycol, propylene glycol monoalkyl ether, diethylene glycol, and diethylene glycol monoalkyl ether.

Examples of the solvent other than water also include an aprotic polar solvent. Examples of the aprotic polar solvent include a solvent having a boiling point of 150°C or higher and 300°C or lower and a dipole moment of 3.0 D or more and 5.0 D or less.

Specific examples of the aprotic polar solvent include N-methyl-2-pyrrolidone (NMP), N,N-dimethylformamide (DMF), N,N-dimethylacetamide (DMAc), dimethyl sulfoxide (DMSO), hexamethylenephosphoramide (HMPA), N-methylcaprolactam, N-acetyl-2-pyrrolidone, 1,3-dimethyl-2-imidazolidinone (DMI), N,N'-dimethylpropylene urea, tetramethylurea, trimethyl phosphate, and triethyl phosphate.

(Particles)

The polyimide precursor film according to the present exemplary embodiment contains particles.

According to the invention, the particles are resin particles. Inorganic particles are described herein but not claimed.

As the particles, particles that do not dissolve in the solvent of the polyimide precursor film and the solution are used.

The expression "insoluble" also includes the fact that the target substance dissolves in the range of 3 mass% or less with respect to the target liquid at 25°C.

The particles may be used alone or in combination of two or more thereof.

The resin particles are not particularly limited, and are resin particles made of a resin other than polyimide. Examples thereof include resin particles obtained by polycondensing polymerizable monomers, such as a polyester resin and a urethane resin, and resin particles obtained by radical polymerization of polymerizable monomers, such as a vinyl resin, an olefin resin, and a fluororesin. Examples of the resin particles obtained by radical polymerization include resin particles of a (meth)acrylic resin, a (meth)acrylic acid ester resin, a styrene-(meth)acrylic resin, a polystyrene resin, and a polyethylene resin.

Among these, the resin particles are preferably at least one selected from the group consisting of a (meth)acrylic resin, a (meth)acrylic acid ester resin, a styrene-(meth)acrylic resin, and a polystyrene resin.

In the present exemplary embodiment, "(meth)acrylic" means to include both "acrylic" and "methacrylic".

The resin particles may or may not be cross-linked. Non-cross-linked resin particles are preferred because of effectively contributing to the relaxation of residual stress in the imidization step for the polyimide precursor. Further, the polyimide precursor solution more preferably contains vinyl resin particles obtained by emulsion polymerization as the resin particles in terms of simplifying the step of producing the polyimide precursor solution.

When the resin particles are vinyl resin particles, the vinyl resin particles are obtained by polymerizing a monomer. Examples of the vinyl resin monomer include the following monomers. For example, vinyl resin units obtained by polymerizing a monomer, such as styrenes having a styrene skeleton, such as styrene, alkyl-substituted styrene (for example, α-methylstyrene, 2-methylstyrene, 3-methylstyrene, 4-methylstyrene, 2-ethylstyrene, 3-ethylstyrene, and 4-ethylstyrene), halogen-substituted styrene (for example, 2-chlorostyrene, 3-chlorostyrene, and 4-chlorostyrene), and vinyl naphthalene; esters having a vinyl group, such as methyl (meth)acrylate, ethyl (meth)acrylate, n-propyl (meth)acrylate, n-butyl (meth)acrylate, lauryl (meth)acrylate, 2-ethylhexyl (meth)acrylate, trimethylolpropane trimethacrylate (TMPTMA); vinyl nitriles such as acrylonitrile and methacrylonitrile; vinyl ethers such as vinyl methyl ether and vinyl isobutyl ether; vinyl ketones such as vinyl methyl ketone, vinyl ethyl ketone, and vinyl isopropenyl ketone; acids such as (meth)acrylic acid, maleic acid, cinnamic acid, fumaric acid, and vinyl sulfonic acid; and bases such as ethyleneimine, vinylpyridine, and vinylamine.

As other monomers, a monofunctional monomer such as vinyl acetate, a bifunctional monomer such as ethylene glycol dimethacrylate, nonane diacrylate, and decanediol diacrylate, and a polyfunctional monomer such as trimethylolpropane triacrylate and trimethylolpropane trimethacrylate may be used in combination.

The vinyl resin may be a resin obtained by using these monomers alone, or a resin which is a copolymer obtained by using two or more of these monomers.

The resin particles preferably have an acidic group on the surface from the viewpoints of improving dispersibility and preventing occurrence of pinholes. It is considered that the acidic group present on the surface of the resin particles functions as a dispersant for the resin particles by forming a salt with a base such as an organic amine compound for dissolving the polyimide precursor in an aqueous solvent. Therefore, it is considered that the dispersibility of the resin particles in the polyimide precursor solution is improved.

The acidic group contained on the surface of the resin particles is not particularly limited, and may be at least one selected from the group consisting of a carboxy group, a sulfonic acid group, and a phenolic hydroxy group. Among these, a carboxy group is preferred.

The monomer for having an acidic group on the surface of the resin particles is not particularly limited as long as it is a monomer having an acidic group. Examples thereof include a monomer having a carboxy group, a monomer having a sulfonic acid group, a monomer having a phenolic hydroxy group, and a salt thereof.

Specific examples include: a monomer having a sulfonic acid group, such as p-styrene sulfonic acid and 4-vinylbenzene sulfonic acid; a monomer having a phenolic hydroxy group, such as 4-vinyldihydrocinnamonic acid, 4-vinylphenol, and 4-hydroxy-3-methoxy-1-propenylbenzene; a monomer having a carboxy group, such as acrylic acid, crotonic acid, methacrylic acid, 3-methyl crotonic acid, fumaric acid, maleic acid, 2-methylisocrotonic acid, 2,4-hexadienedioic acid, 2-pentenoic acid, sorbic acid, citraconic acid, 2-hexenoic acid, and monoethyl fumarate; and a salt thereof. These monomers having an acidic group may be mixed and polymerized with a monomer having no acidic group, or a monomer having no acidic group may be polymerizing and granulated, and then a monomer having an acidic group on the surface may be polymerized. These monomers may be used alone or in combination of two or more.

Among these, preferred is a monomer having a carboxy group, such as acrylic acid, crotonic acid, methacrylic acid, 3-methyl crotonic acid, fumaric acid, maleic acid, 2-methylisocrotonic acid, 2,4-hexadienedioic acid, 2-pentenoic acid, sorbic acid, citraconic acid, 2-hexenoic acid, monoethyl fumarate, and a salt thereof. The monomer having a carboxy group may be used alone or in combination of two or more thereof.

That is, the resin particles having an acidic group on the surface preferably have a skeleton derived from a monomer having a carboxy group at least selected from the group consisting of acrylic acid, crotonic acid, methacrylic acid, 3-methyl crotonic acid, fumaric acid, maleic acid, 2-methylisocrotonic acid, 2,4-hexadienedioic acid, 2-pentenoic acid, sorbic acid, citraconic acid, 2-hexenoic acid, monoethyl fumarate, and a salt thereof.

When a monomer having an acidic group and a monomer having no acidic group are mixed and polymerized, the amount of the monomer having an acidic group is not particularly limited. However, when the amount of the monomer having an acidic group is too small, the dispersibility of the resin particles in the polyimide precursor solution may decrease, and when the amount of the monomer having an acidic group is too large, agglomerates of the polymer may be generated during emulsion polymerization. Therefore, the monomer having an acidic group is preferably 0.3 mass% or more and 20 mass% or less, more preferably 0.5 mass% or more and 15 mass% or less, and particularly preferably 0.7 mass% or more and 10 mass% or less based on all monomers.

On the other hand, when a monomer having no acidic group is emulsion-polymerized and then a monomer having an acidic group is further added for polymerization, from the viewpoint as described above, the amount of the monomer having an acidic group is preferably 0.01 mass% or more and 10 mass% or less, more preferably 0.05 mass% or more and 7 mass% or less, and particularly preferable 0.07 mass% or more and 5 mass% or less based on all monomers.

As described above, it is preferable that the resin particles are not cross-linked. When cross-linking resin particles, if a cross-linking agent is used as at least a part of the monomer component, the ratio of the cross-linking agent to all the monomer components is preferably 0 mass% or more and 20 mass% or less, more preferably 0 mass% or more and 5 mass% or less, and particularly preferably 0 mass%.

When the monomer used in the resin constituting the vinyl resin particles contains styrene, the ratio of styrene to all the monomer components is preferably 20 mass% or more and 100 mass% or less, and more preferably 40 mass% or more and 100 mass% or less.

The resin particles may be obtained by further polymerizing a monomer having an acidic group on the surface of a commercially available product. Specific examples of the cross-linked resin particles include cross-linked polymethyl methacrylate (MBX-series, manufactured by Sekisui Kasei Co., Ltd.), cross-linked polystyrene (SBX-series, manufactured by Sekisui Kasei Co., Ltd.), and copolymerized cross-linked resin particles of methyl methacrylate and styrene (MSX-series, manufactured by Sekisui Kasei Co., Ltd.).

Examples of the non-cross-linked resin particles include polymethyl methacrylate (MB-series, manufactured by Sekisui Kasei Co., Ltd.), and (meth)acrylic acid ester-styrene copolymers (FS-series, manufactured by Nippon Paint).

Specific examples of inorganic particles include silica particles, titanium oxide particles, and aluminum oxide particles. Inorganic particles are described herein but not claimed.

Silica particles may be sol-gel silica obtained by a sol-gel method or fumed silica obtained by a vapor phase method. As silica particles, synthetic particles may be used, or commercially available products may be used. Further, silica particles may be an aqueous solvent dispersion (for example, SNOWTEX (registered trademark) series, manufactured by Nissan Chemical Corporation) or a dry powder (for example, manufactured by AEROSIL series Evonik, Inc.). From the viewpoint of dispersibility, it is preferable to use an aqueous dispersion liquid as silica particles.

Inorganic particles may also contain particulate materials such as a silica powder, an alumina powder, a barium sulfate powder, a titanium oxide powder, mica, and talc, which are added to improve mechanical strength.

According to the invention, the volume average particle diameter of the particles is 0.1 μm or more and 1 μm or less.

The volume average particle diameter of the particles is more preferably 0.25 μm or more and 0.98 μm or less, and still more preferably 0.25 μm or more and 0.95 μm or less.

The volume particle size distribution index (GSDv) of the particles is preferably 1.30 or less, more preferably 1.25 or less, and most preferably 1.20 or less.

The volume average particle diameter of the particles is measured by using a volume-based particle diameter distribution obtained by measurement by a laser diffraction type particle diameter distribution analyzer (for example, Coulter Counter LS13, manufactured by Beckman Coulter), drawing the cumulative distribution from the small particle diameter side with respect to the divided particle size range (so-called channel), and using the particle diameter corresponding to the cumulative percentage of 50% with respect to all the particles as the volume average particle diameter D50v.

Then, the volume particle size distribution index of the particles is calculated as $(D84v/D16v)^{1/2}$ from the particle diameter distribution in the polyimide precursor solution. In the volume cumulative distribution drawn from the small particle diameter side, the particle diameter corresponding to the cumulative percentage of 16% is the volume particle diameter D16v, and the particle diameter corresponding to the cumulative percentage of 50% is the volume average particle diameter D50v.

The polyimide precursor film contains particles, the volume average particle diameter of the particles is 0.1 μm or more and 1 μm or less, and the content of the particles is 30 mass% or more and 80 mass% or less with respect to the total amount of the polyimide precursor and the particles.

The polyimide precursor film according to the present exemplary embodiment has high breakage resistance and self-supporting property, and even when the particles are contained in the above mode, deterioration of the breakage resistance and the self-supporting property is prevented. Accordingly, a polyimide film having prevented breakage can be obtained.

(Other Additives)

The polyimide precursor film according to the present exemplary embodiment may contain a catalyst for promoting an imidization reaction, a leveling material for improving the quality of film formation, and the like contained in the polyimide precursor solution.

As the catalyst for promoting the imidization reaction, a dehydrating agent such as an acid anhydride, an acid catalyst such as a phenol derivative, a sulfonic acid derivative, or a benzoic acid derivative may be used.

A polyimide precursor film may contain, as a material other than inorganic particles having a volume average particle diameter of 0.001 μm or more and 0.2 μm or less, a conductive material (specifically, a conductive material (for example, having a volume resistivity of less than $10^7$ Ω·cm) or a semi-conductive material (for example, having a volume resistivity of $10^7$ Ω·cm or more and $10^{13}$ Ω·cm or less)) as a conductive agent added for imparting conductivity, for example, depending on the intended use.

Examples of the conductive agent include: carbon black (for example, acidic carbon black having a pH of 5.0 or less); metals (for example, aluminum or nickel); metal oxides (for example, yttrium oxide or tin oxide); and ionic conductive materials (for example, potassium titanate or LiCl). The conductive materials may be used alone or in combination of two or more thereof.

(Mechanical Properties of Polyimide Precursor Film)

The tensile strength of the polyimide precursor film according to the present exemplary embodiment may be 5 kPa or more and 40 kPa or less, and preferably 8 kPa or more and 35 kPa or less.

When the tensile strength of the polyimide precursor film is within the above range, the break resistance and the self-supporting property are high, and even when particles are contained in the above mode, deterioration of the break resistance and the self-supporting property is prevented.

The tensile strength of the polyimide precursor film is measured by a tensile test according to ISO 527: 2012.

<Method for Producing Polyimide Film>

Hereinafter, an example of a preferred method for producing a polyimide film according to the present exemplary embodiment will be described.

The method for producing a polyimide film according to the present exemplary embodiment includes the following methods.

1) A method for producing a polyimide film including a step of heating the polyimide precursor film according to the present exemplary embodiment to imidize the polyimide precursor to form a polyimide film, when particles are not contained in the polyimide precursor film. This method is not claimed.
2) A method for producing a polyimide film including a step of heating the polyimide precursor film according to the

present exemplary embodiment to imidize the polyimide precursor to form a polyimide film, when particles are contained in the polyimide precursor film, this step including a treatment of removing particles. With the present production method, a porous polyimide film is obtained.

Hereinafter, an example of a method for producing a porous polyimide film using a polyimide precursor film containing particles (hereinafter, also referred to as "a method for producing a porous polyimide film according to the present exemplary embodiment") will be described together with a method for producing a polyimide precursor film containing particles.

A method for producing a polyimide precursor film containing no particles and a method for producing a non-porous polyimide film using a polyimide precursor film containing no particles are the same as the method for producing a polyimide precursor film containing particles and the method for producing a porous polyimide film except that the polyimide precursor solution used does not contain particles.

The method for producing a porous polyimide film according to the present exemplary embodiment includes, for example, the following steps.

A first step of coating a polyimide precursor solution containing particles to form a coating film, and then drying the coating film to form a polyimide precursor film (hereinafter, also simply referred to as "film") containing the polyimide precursor and the particles.

A second step of heating the film to imidize the polyimide precursor to form a polyimide film, the second step including a treatment of removing particles.

Fig 1 referred to in the description of the production method is a schematic view showing a configuration of the porous polyimide film according to the present exemplary embodiment.

In Fig. 1, the same components are designated by the same reference numerals. In reference numerals in Fig. 1, 31 denotes a substrate, 51 denotes a release layer, 10A denotes a pore, and 10 denotes a porous polyimide film.

(First Step)

In the first step, a polyimide precursor solution is prepared.

The method for producing the polyimide precursor solution will be described in detail below. The method for producing the polyimide precursor solution containing resin particles as particles (resin particle-dispersed polyimide precursor solution) will be described.

Examples of the method for producing the polyimide precursor solution according to the present exemplary embodiment include the methods according to (i) and (ii) below.

(i) a method of mixing and dispersing resin particles (powder or organic solvent dispersion liquid) after preparing the polyimide precursor solution before dispersing the resin particles
(ii) a method of synthesizing a polyimide precursor in an organic solvent dispersion liquid of resin particles

(i) Method of mixing and dispersing resin particles after preparing polyimide precursor solution before dispersing resin particles

First, the polyimide precursor solution before dispersing the resin particles is obtained by polymerizing a tetracarboxylic dianhydride and a diamine compound in an organic solvent to produce a resin (polyimide precursor) using a known method.

Next, the resin particles described above are mixed with the obtained polyimide precursor solution before dispersing the resin particles, and the mixture is stirred. Alternatively, the resin particles may be redispersed in an organic solvent that does not dissolve the resin particles (either alone or in a mixed solvent), and then mixed and stirred with the polyimide precursor solution.

The method of mixing, stirring and dispersing is not particularly limited. Further, in order to improve the dispersibility of the resin particles, a known nonionic or ionic surfactant may be added.

(ii) Method of synthesizing polyimide precursor in organic solvent dispersion liquid of resin particles

First, a solution in which the resin particles are dispersed in an organic solvent in which the resin particles are not dissolved and the polyimide precursor is dissolved is prepared. Next, in the solution, a tetracarboxylic dianhydride and a diamine compound are polymerized to form a resin (polyimide precursor), and an organic solvent solution of the polyimide precursor is obtained.

The polyimide precursor solution obtained by the above method is coated onto a substrate to form a coating film containing the polyimide precursor solution and the particles. Then, the coating film formed on the substrate is dried

to form a film containing the polyimide precursor and the particles.

The substrate on which the polyimide precursor solution is coated is not particularly limited. Examples thereof include a resin substrate made of polystyrene, polyethylene terephthalate or the like; a glass substrate; a ceramic substrate; a metallic substrate made of iron, stainless steel (SUS) or the like; and a composite material substrate made of a material combining the above materials. If necessary, the substrate may be provided with a release layer by performing a release treatment with, for example, a silicone or fluorine release agent.

The method of coating the polyimide precursor solution onto the substrate is not particularly limited. Examples thereof include various methods such as a spray coating method, a rotary coating method, a roll coating method, a bar coating method, a slit die coating method, and an inkjet coating method.

The coating amount of the polyimide precursor solution for obtaining the coating film containing the polyimide precursor solution and the particles may be set to an amount that can obtain a predetermined film thickness.

After the coating film containing the polyimide precursor solution and the particles is formed, the coating film is dried to form a film containing the polyimide precursor and the particles. Specifically, the film is formed by drying the coating film containing the polyimide precursor solution and the particles by, for example, a method such as heat drying, natural drying, or vacuum drying.

(Second Step)

The second step is a step of heating the film containing the polyimide precursor and the particles obtained in the first step to imidize the polyimide precursor to form a polyimide film. The second step includes a treatment of removing particles. After the treatment for removing the particles, a porous polyimide film is obtained.

In the second step, specifically, in the step of forming the polyimide film, the film containing the polyimide precursor and the particles obtained in the first step is heated to progress imidization, and heating is further performed to form a polyimide film that has undergone imidization. As the imidization progresses and the imidization rate increases, the polyimide precursor is difficult to dissolve in an organic solvent.

Then, in the second step, a treatment of removing particles is performed. The particles may be removed in the process of heating the film to imidize the polyimide precursor, or may be removed from the polyimide film after the imidization is completed.

In the present exemplary embodiment, the process of imidizing the polyimide precursor indicates a process in which the film containing the polyimide precursor and the particles obtained in the first step is heated to progress imidization, and the polyimide precursor is in a state before the polyimide film is formed after the imidization is completed.

The treatment of removing particles is preferably carried out when the imidization rate of the polyimide precursor in the polyimide film is 10% or more in the process of imidizing the polyimide precursor in terms of particle removability and the like. When the imidization rate is 10% or more, it is easy to maintain the morphology.

Next, the treatment of removing particles will be described.

First, a treatment of removing resin particles will be described.

Examples of the treatment of removing resin particles include a method of removing the resin particles by heating, a method of removing the resin particles with an organic solvent that dissolves the resin particles, and a method of removing the resin particles by decomposition with a laser or the like. Among these, a method of removing the resin particles by heating and a method of removing the resin particles with an organic solvent that dissolves the resin particles are preferred.

As the method of removing the resin particles by heating, for example, in the process of imidizing the polyimide precursor, the resin particles may be removed by being decomposed by heating for progressing the imidization. In this case, there is no operation of removing the resin particles with a solvent and the number of steps may be reduced.

Examples of the method of removing the resin particles with an organic solvent that dissolves the resin particles include a method of dissolving and removing the resin particles by bringing the resin particles into contact with an organic solvent that dissolves the resin particles (for example, immersing the resin particles in the solvent). Immersion in the solvent in this state is preferred in that the dissolution efficiency of the resin particles is increased.

The organic solvent for dissolving the resin particles and for removing the resin particles is not particularly limited as long as it is an organic solvent that does not dissolve the polyimide film before imidization is completed and the polyimide film after imidization is completed but dissolves the resin particles. Examples thereof include: ethers such as tetrahydrofuran (THF); aromatic substances such as toluene; ketones such as acetone; and esters such as ethyl acetate.

When the resin particles are removed by dissolution and removal to form pores, a general-purpose solvent such as tetrahydrofuran, acetone, toluene, and ethyl acetate is preferred. Water may also be used, depending on the resin particles and the polyimide precursor used.

When the resin particles are removed by heating to form pores, the resin particles are not decomposed at the drying temperature after coating, but are thermally decomposed at a temperature at which the film of the polyimide

precursor is imidized. From this viewpoint, the thermal decomposition start temperature of the resin particles is preferably 150°C or higher and 320°C or lower, more preferably 180°C or higher and 300°C or lower, and still more preferably 200°C or higher and 280°C or lower.

Here, a treatment of removing inorganic particles when the polyimide precursor film contains inorganic particles will be described.

Examples of the treatment of removing inorganic particles include a method of removing the inorganic particles using a liquid that dissolves the inorganic particles but does not dissolve the polyimide precursor or the polyimide (hereinafter, may be referred to as "particle removing liquid"). The particle removing liquid is selected depending on the inorganic particles used. Examples thereof include: an aqueous solution of acids such as hydrofluoric acid, hydrochloric acid, hydrobromic acid, boric acid, perchloric acid, phosphoric acid, sulfuric acid, nitric acid, acetic acid, trifluoroacetic acid, and citric acid; and an aqueous solution of bases such as sodium hydroxide, potassium hydroxide, tetramethylammonium hydroxide, sodium carbonate, potassium carbonate, ammonia, and the above organic amines. Water alone may be used, depending on the inorganic particles and the polyimide precursor used.

In the second step, the heating method for heating the film obtained in the first step to progress imidization to obtain a polyimide film is not particularly limited. For example, a method of heating in two stages may be mentioned. In the case of heating in two stages, specific heating conditions include the following.

The heating condition in the first stage is preferably a temperature at which the shape of the particles is maintained. Specifically, for example, the heating temperature is preferably in the range of 50°C or higher and 150°C or lower, and preferably in the range of 60°C or higher and 140°C or lower. The heating time is preferably in the range of 10 minutes or longer and 60 minutes or shorter. The higher the heating temperature, the shorter the heating time may be.

Examples of the heating conditions in the second stage include heating at 150°C or higher and 450°C or lower (preferably 200°C or higher and 430°C or lower) for 20 minutes or longer and 120 minutes or shorter. When the heating conditions are set within these ranges, the imidization reaction further progresses, and a polyimide film is obtained. During the heating reaction, the temperature is preferably gradually increased stepwise or at a constant rate before the final temperature of heating is reached.

The heating conditions are not limited to the above two-stage heating method, and for example, a one-stage heating method may be adopted. In the case of the one-stage heating method, for example, the imidization may be completed only under the heating conditions shown in the second stage above.

In the second step, from the viewpoint of increasing the porosity, it is preferable to perform a treatment of exposing the particles to make the particles in an exposed state. In the second step, the treatment of exposing the particles is preferably performed after the process of imidizing the polyimide precursor or after the imidization and before the treatment of removing particles.

In this case, for example, when forming a film on a substrate using the polyimide precursor solution, the polyimide precursor solution is coated onto the substrate to form a coating film in which particles are embedded. Next, the coating film is dried to form a film containing a polyimide precursor and particles. The film formed by this method is in a state where particles are embedded. This film may be subjected to the treatment of exposing the particles from the polyimide film in the process of imidizing the polyimide precursor before heating and removing the particles or after the imidization is completed.

In the second step, the treatment of exposing the particles may be performed, for example, when the polyimide film is in the following state.

In a case where the treatment of exposing the particles is performed when the imidization ratio of the polyimide precursor in the polyimide film is less than 10% (that is, the polyimide precursor is dissoluble in a solvent), examples of the treatment of exposing the particles embedded in the polyimide film include a wiping treatment and an immersing treatment in a solvent. The solvent used at this time may be the same as or different from the solvent used for the polyimide precursor solution of the present exemplary embodiment.

In a case where the treatment of exposing the particles is performed when the imidization rate of the polyimide precursor in the polyimide film is 10% or more (that is, it is difficult to dissolve the polyimide precursor in water or an organic solvent), and when the polyimide film is in a state where imidization is completed, examples include a method of mechanically cutting with tools such as sandpaper to expose the particles, and a method of decomposing the particles with a laser or the like to expose the resin particles when the particles are resin particles.

For example, in the case of mechanical cutting, a part of the particles present in the upper region (that is, the region on the side of the particles away from the substrate) of the particles embedded in the polyimide film is cut together with the polyimide film present on the upper part of the particles, and the cut particles are exposed from the surface of the polyimide film.

Thereafter, the particles are removed from the polyimide film with exposed particles by the above treatment of removing the particles. Then, a porous polyimide film from which the particles have been removed is obtained (see Fig. 1).

In the above, the process of producing the porous polyimide film which has been subjected to the treatment of exposing the particles in the second step has been described. However, in order to increase the porosity, the treatment

of exposing the particles may be performed in the first step. In this case, in the first step, after obtaining the coating film, the particles may be exposed in the process of forming a film by drying to make the particles in an exposed state. By performing the treatment of exposing the particles, the porosity of the porous polyimide film is increased.

For example, in the process of obtaining a coating film containing a polyimide precursor solution and particles and then drying the coating film to form a film containing the polyimide precursor and the particles, as described above, the film is in a state where the polyimide precursor is dissoluble in a solvent. When the film is in this state, the particles may be exposed by, for example, a wiping treatment or an immersing treatment in a solvent. Specifically, when a treatment is performed to expose a particle layer by wiping, for example, with a solvent, the polyimide precursor solution present in a region equal to or larger than the thickness of the particle layer, the polyimide precursor solution present in the region equal to or larger than the thickness of the particle layer is removed. Then, the particles present in the upper region of the particle layer (that is, the region on the side of the particle layer away from the substrate) are exposed from the surface of the film.

In the second step, the substrate for forming the above film used in the first step may be peeled off when the film becomes a dried film, when the polyimide precursor is difficult to dissolve in an organic solvent, or when the imidization is completed and the film is formed.

After the above steps, a porous polyimide film is obtained. Then, the porous polyimide film may be post-processed.

Here, the imidization ratio of the polyimide precursor will be described.

Examples of a partially imidized polyimide precursor include a precursor having a structure having a repeating unit represented by the following general formula (V-1), the following general formula (V-2), and the following general formula (V-3).

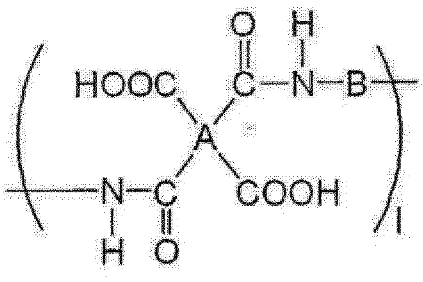
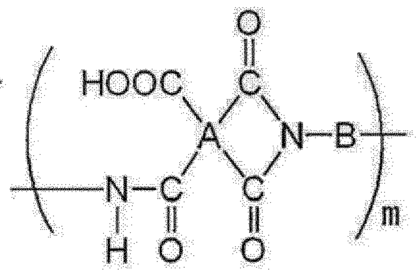
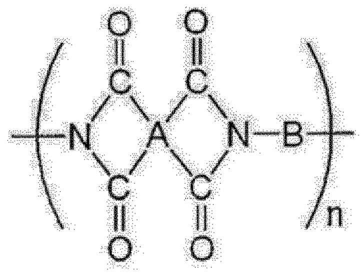

(V-1) (V-2) (V-3)

In the general formula (V-1), the general formula (V-2), and the general formula (V-3), A and B have the same meaning as A and B in the formula (I). l represents an integer of 1 or more, and m and n independently represent an integer of 0 or 1 or more.

The imidization ratio of the polyimide precursor represents the ratio of the number of imide-ring-closed bond parts (2n + m) to the total number of bonds (2l + 2m + 2n) in the bonding part of the polyimide precursor which is a reaction part of the tetracarboxylic dianhydride and the diamine compound. That is, the imidization ratio of the polyimide precursor is indicated by "(2n + m)/(2l + 2m + 2n)".

The imidization ratio of the polyimide precursor (value of "(2n + m)/(2l + 2m + 2n)") is measured by the following method.

-Measurement of Imidization Ratio of Polyimide Precursor-

· Preparation of polyimide precursor sample

(i) A polyimide precursor solution to be measured is coated onto a silicon wafer in a film thickness range of 1 μm or more and 10 μm or less to prepare a coating film sample.

(ii) The coating film sample is immersed in tetrahydrofuran (THF) for 20 minutes to replace the solvent in the coating film sample with tetrahydrofuran (THF). The solvent for immersion is not limited to THF, and may be selected from a solvent that does not dissolve the polyimide precursor and may be miscible with the solvent component contained in the polyimide precursor solution. Specifically, alcohol solvents such as methanol and ethanol, and ether compounds such as dioxane may be used.

(iii) The coating film sample is taken out from the THF, and $N_2$ gas is sprayed onto the THF adhering to the surface of the coating film sample to remove the THF. A treatment is performed for 12 hours or longer in a range of 5°C or higher and 25°C or lower under a reduced pressure of 10 mmHg or less to dry the coating film sample, so as to prepare a polyimide precursor sample.

· Preparation of 100% imidized standard sample

(iv) In the same manner as in the (i) above, a polyimide precursor solution to be measured is coated onto a silicon wafer to prepare a coating film sample.

(v) The coating film sample is heated at 380°C for 60 minutes to carry out an imidization reaction to prepare a 100% imidized standard sample.

· Measurement and analysis

(vi) Infrared absorption spectra of the 100% imidized standard sample and the polyimide precursor sample are measured using a Fourier transform infrared spectrophotometer (FT-730, manufactured by HORIBA, Ltd.). The ratio I' (100) of the absorption peak (Ab'(1780 $cm^{-1}$)) derived from the imide bond near 1780 $cm^{-1}$ to the absorption peak (Ab'(1500 $cm^{-1}$)) derived from the aromatic ring near 1500 $cm^{-1}$ in the 100% imidized standard sample is determined.

(vii) Similarly, the polyimide precursor sample is measured, and the ratio I (x) of the absorption peak (1780 $cm^{-1}$) derived from the imide bond near 1780 $cm^{-1}$ to the absorption peak (1500 $cm^{-1}$) derived from the aromatic ring near 1500 $cm^{-1}$ is determined.

Then, using the measured absorption peaks I' (100) and I (x), the imidization ratio of the polyimide precursor is calculated based on the following equation.

$$\cdot \text{ Equation: Imidization ratio of polyimide precursor} = I(x)/I'(100)$$

$$\cdot \text{ Equation: } I'(100) = (Ab'(1780\ cm^{-1}))/(Ab'(1500\ cm^{-1}))$$

$$\cdot \text{ Equation: } I(x) = (Ab(1780\ cm^{-1}))/(Ab(1500\ cm^{-1}))$$

The measurement of the imidization ratio of the polyimide precursor is applied to the measurement of the imidization ratio of an aromatic polyimide precursor. When measuring the imidization ratio of an aliphatic polyimide precursor, a peak derived from a structure that does not change before and after the imidization reaction is used as an internal standard peak instead of the absorption peak of the aromatic ring.

<Porous Polyimide Film>

Hereinafter, the porous polyimide film of the present exemplary embodiment will be described.

The porous polyimide film of the present exemplary embodiment is produced by the above method for producing a porous polyimide film according to the present exemplary embodiment.

The porous polyimide film is not particularly limited, and the porosity is preferably 30% or more, more preferably 40% or more, and still more preferably 50% or more. The upper limit of the porosity is not particularly limited, and is preferably in the range of 90% or less.

The shape of the pores is preferably spherical or close to spherical. Further, it is preferable that the pores have a continuous shape in which the pores are connected to each other. The pore diameter of the part where the pores are connected to each other is, for example, preferably 1/100 or more and 1/2 or less, more preferably 1/50 or more and 1/3 or less, and still more preferably 1/20 or more and 1/4 or less of the maximum pore diameter. Specifically, the average value of the pore diameter of the part where the pores are connected to each other is preferably 5 nm or more and 1500 nm or less.

The pore diameter of the pores of the porous polyimide film is preferably in the range of 0.1 μm or more and 1 μm or less, more preferably in the range of 0.12 μm or more and 0.98 μm or less, and still more preferably in the range of 0.14 μm or more and 0.96 μm or less.

The pore diameter of the pores of the porous polyimide film is not limited to the above range, and is preferably changed according to the use of the porous polyimide film.

The porous polyimide film of the present exemplary embodiment has a ratio of the maximum diameter to the

minimum diameter of the pores, that is, a ratio of the maximum value to the minimum value of the pore diameter, of preferably 1 or more and 2 or less, more preferably 1 or more and 1.9 or less, and still more preferably 1 or more and 1.8 or less. Among this range, the ratio is more preferably close to 1. Within this range, a variation in pore diameter is prevented. Further, when the porous polyimide film of the present exemplary embodiment is applied to, for example, a battery separator of a lithium ion battery, the occurrence of turbulence in the ion flow is prevented, so that the formation of lithium dendrites is easily prevented. The "ratio of the maximum diameter to the minimum diameter of the pores" is a ratio represented by a value obtained by dividing the maximum diameter of the pores by the minimum diameter of the pore (that is, the maximum value/the minimum value of the pore diameter).

The pore diameter and the pore diameter of the part where the pores are connected to each other are values observed and measured by a scanning electron microscope (SEM). Specifically, first, a porous polyimide film is cut out and a measurement sample is prepared. Then, the measurement sample is observed and measured by VE SEM manufactured by KEYENCE CORPORATION using image processing software included in the VE SEM as standard. The observation and measurement are performed on 100 pore parts in the cross section of the measurement sample, and the average value, the minimum diameter, the maximum diameter, and the arithmetic average diameter are obtained. When the shape of the pore is not circular, the longest part is the diameter.

The film thickness of the porous polyimide film is not particularly limited, and is preferably 15 μm or more and 500 μm or less.

The film thickness of the porous polyimide film is measured in an environment of 23°C ± 1°C using a length measuring device (high-precision digital length measuring device MINIAX PH-13 and display unit DH-150, both manufactured by Tokyo Seimitsu Co., Ltd.).

(Use of Porous Polyimide Film)

Examples of the use of the porous polyimide film according to the present exemplary embodiment include: battery separators for lithium batteries, etc.; separators for electrolytic capacitors; electrolyte membranes for fuel cells, etc.; battery electrode materials; gas or liquid separation membranes; low dielectric constant materials; and filtration membrane.

<Lithium Ion Secondary Battery>

A lithium ion secondary battery provided with the porous polyimide film according to the present exemplary embodiment as a separator for a lithium ion secondary battery will be described with reference to Fig. 2.

Fig. 2 is a schematic partial cross-sectional view showing an example of a lithium ion secondary battery to which a separator for a lithium ion secondary battery is applied.

As shown in Fig. 2, a lithium ion secondary battery 100 includes a positive electrode active material layer 110, a separator layer 510, and a negative electrode active material layer 310 housed inside an exterior member (not shown). The positive electrode active material layer 110 is provided on a positive electrode current collector 130, and the negative electrode active material layer 310 is provided on a negative electrode current collector 330. The separator layer 510 is provided to separate the positive electrode active material layer 110 and the negative electrode active material layer 310, and is arranged between the positive electrode active material layer 110 and the negative electrode active material layer 310 such that the positive electrode active material layer 110 and the negative electrode active material layer 310 face each other. The separator layer 510 includes a separator 511 and an electrolytic solution 513 filled inside the pores of the separator 511. The porous polyimide film according to the present exemplary embodiment is applied to the separator 511. The positive electrode current collector 130 and the negative electrode current collector 330 are members provided if necessary.

(Positive Electrode Current Collector 130 and Negative Electrode Current Collector 330)

The material for use in the positive electrode current collector 130 and the negative electrode current collector 330 is not particularly limited, and any known conductive material may be used. For example, metals such as aluminum, copper, nickel and titanium may be used.

(Positive Electrode Active Material Layer 110)

The positive electrode active material layer 110 is a layer containing a positive electrode active material. If necessary, known additives such as a conductive auxiliary and a binder resin may be contained. The positive electrode active material is not particularly limited, and a known positive electrode active material is used. Examples thereof include lithium-containing composite oxides ($LiCoO_2$, $LiNiO_2$, $LiMnO_2$, $LiMn_2O_4$, $LiFeMnO_4$, $LiV_2O_5$, etc.), lithium-containing

phosphates ($LiFePO_4$, $LiCoPO_4$, $LiMnPO_4$, $LiNiPO_4$, etc.) and conductive polymers (polyacetylene, polyaniline, polypyrrole, polythiophene, etc.). The positive electrode active materials may be used alone or in combination of two or more thereof.

(Negative Electrode Active Material Layer 310)

The negative electrode active material layer 310 is a layer containing a negative electrode active material. If necessary, known additives such as a binder resin may be contained. The negative electrode active material is not particularly limited, and a known positive electrode active material is used. Examples thereof include carbon materials (graphite (natural graphite, artificial graphite), carbon nanotubes, graphitized carbon, low temperature calcined carbon, etc.), metals (aluminum, silicon, zirconium, titanium, etc.), and metal oxides (tin dioxide, lithium titanate, etc.). The negative electrode active materials may be used alone or in combination of two or more thereof.

(Electrolytic Solution 513)

Examples of the electrolytic solution 513 include a non-aqueous electrolyte solution containing an electrolyte and a non-aqueous solvent.

Examples of the electrolyte include lithium salt electrolytes ($LiPF_6$, $LiBF_4$, $LiSbF_6$, $LiAsF_6$, $LiClO_4$, $LiN(FSO_2)_2$, $LiN(CF_3SO_2)_2$, $LiN(C_2F_5SO_2)$, and $LiC(CF_3SO_2)_3$). The electrolytes may be used alone or in combination of two or more thereof.

Examples of the non-aqueous solvent include cyclic carbonates (ethylene carbonate, propylene carbonate, butylene carbonate, etc.), and chain carbonates (diethyl carbonate, dimethyl carbonate, ethyl methyl carbonate, methyl acetate, ethyl acetate, methyl propionate, ethyl propionate, $\gamma$-butyrolactone, 1,2-dimethoxyethane, 1,2-diethoxyethane, etc.). The non-aqueous solvents may be used alone or in combination of two or more thereof.

(Method for Producing Lithium Ion Secondary Battery 100)

An example of a method for producing the lithium ion secondary battery 100 will be described.

A coating liquid for forming the positive electrode active material layer 110 containing the positive electrode active material is coated onto and dried on the positive electrode current collector 130 to obtain a positive electrode having the positive electrode active material layer 110 provided on the positive electrode current collector 130.

Similarly, the coating liquid for forming the negative electrode active material layer 310 containing the negative electrode active material is coated onto and dried on the negative electrode current collector 330 to obtain a negative electrode having the negative electrode active material layer 310 provided on the negative electrode current collector 330. The positive electrode and the negative electrode may be subjected to compression processing, if necessary.

Next, the separator 511 is arranged between the positive electrode active material layer 110 of the positive electrode and the negative electrode active material layer 310 of the negative electrode such that the positive electrode active material layer 110 of the positive electrode and the negative electrode active material layer 310 of the negative electrode face each other, thereby forming a laminated structure. In the laminated structure, the positive electrode current collector 130, the positive electrode active material layer 110, the separator layer 510, the negative electrode active material layer 310, and the negative electrode current collector 330 are laminated in this order. At this time, the laminated structure may be subjected to compression processing if necessary.

Next, the laminated structure is housed in an exterior member, and then the electrolytic solution 513 is injected into the laminated structure. The injected electrolytic solution 513 penetrates into the pores of the separator 511.

Thus, the lithium ion secondary battery 100 is obtained.

<All-solid-state Battery>

Next, an all-solid-state battery to which the porous polyimide film according to the present exemplary embodiment is applied will be described. Hereinafter, description will be made with reference to Fig. 3.

Fig. 3 is a schematic partial cross-sectional view showing an example of the all-solid-state battery according to the present exemplary embodiment. As shown in Fig. 3, an all-solid-state battery 200 includes a positive electrode active material layer 220, a solid electrolyte layer 620, and a negative electrode active material layer 420 housed inside an exterior member (not shown). The positive electrode active material layer 220 is provided on a positive electrode current collector 240, and the negative electrode active material layer 420 is provided on a negative electrode current collector 440. The solid electrolyte layer 620 is arranged between the positive electrode active material layer 220 and the negative electrode active material layer 420 such that the positive electrode active material layer 220 and the negative electrode active material layer 420 face each other. The solid electrolyte layer 620 includes a solid electrolyte 624 and

a holding body 622 that holds the solid electrolyte 624, and the solid electrolyte 624 is filled inside the pores of the holding body 622. The porous polyimide film according to the present exemplary embodiment is applied to the holding body 622 that holds the solid electrolyte 624. The positive electrode current collector 240 and the negative electrode current collector 440 are members provided if necessary.

(Positive Electrode Current Collector 240 and Negative Electrode Current Collector 440)

Examples of the material for use in the positive electrode current collector 240 and the negative electrode current collector 440 include the same materials as those described in the above lithium ion secondary battery.

(Positive Electrode Active Material Layer 220 and Negative Electrode Active Material Layer 420)

Examples of the material for use in the positive electrode active material layer 220 and the negative electrode active material layer 420 include the same materials as those described in the above lithium ion secondary battery.

(Solid Electrolyte 624)

The solid electrolyte 624 is not particularly limited, and examples thereof include known solid electrolytes. Examples thereof include a polymer solid electrolyte, an oxide solid electrolyte, a sulfide solid electrolyte, a halide solid electrolyte, and a nitride solid electrolyte.

Examples of the polymer solid electrolyte include fluororesins (homopolymers such as polyvinylidene fluoride, polyhexafluoropropylene, and polytetrafluoroethylene, copolymers having the above as structural units, etc.), polyethylene oxide resins, polyacrylonitrile resins, and polyacrylate resins. The sulfide solid electrolyte is preferably contained because of having excellent lithium ion conductivity. In the same respect, it is preferable to contain a sulfide solid electrolyte containing sulfur and at least one of lithium and phosphorus as constituent elements.

Examples of the oxide solid electrolyte include oxide solid electrolyte particles containing lithium. Examples thereof include $Li_2O$-$B_2O_3$-$P_2O_5$ and $Li_2O$-$SiO_2$.

Examples of the sulfide solid electrolyte include a sulfide solid electrolyte containing sulfur and at least one of lithium and phosphorus as constituent elements. Examples thereof include $8Li_2O{\cdot}67Li_2S$-$25P_2S_5$, $Li_2S$, $P_2S_5$, $Li_2S$-$SiS_2$, LiI-$Li_2S$-$SiS_2$, LiI-$Li_2S$-$P_2S_5$, LiI-$Li_3PO_4$-$P_2S_5$, LiI-$Li_2S$-$P_2O_5$, and LiI-$Li_2S$-$B_2S_3$.

Examples of the halide solid electrolyte include LiI.

Examples of the nitride solid electrolyte include $Li_3N$.

(Method for Producing All-solid-state Battery 200)

An example of a method for producing the all-solid-state battery 200 will be described.

A coating liquid for forming the positive electrode active material layer 220 containing the positive electrode active material is coated onto and dried on the positive electrode current collector 240 to obtain a positive electrode having the positive electrode active material layer 220 provided on the positive electrode current collector 240.

Similarly, the coating liquid for forming the negative electrode active material layer 420 containing the negative electrode active material is coated onto and dried on the negative electrode current collector 440 to obtain a negative electrode having the negative electrode active material layer 420 provided on the negative electrode current collector 440.

The positive electrode and the negative electrode may be subjected to compression processing, if necessary.

Next, a coating liquid containing the solid electrolyte 624 for forming the solid electrolyte layer 620 is coated onto a substrate and dried to form a layered solid electrolyte.

Next, as a material for forming the solid electrolyte layer 620, a polyimide film (the porous polyimide film according to the present exemplary embodiment) as the holding body 622 and the layered solid electrolyte 624 are superposed on the positive electrode active material layer 220 of the positive electrode. Further, the negative electrode is superposed on the material for forming the solid electrolyte layer 620 such that the negative electrode active material layer 420 of the negative electrode faces the positive electrode active material layer 220, thereby forming a laminated structure. In the laminated structure, the positive electrode current collector 240, the positive electrode active material layer 220, the solid electrolyte layer 620, the negative electrode active material layer 420, and the negative electrode current collector 440 are laminated in this order.

Next, the laminated structure is subjected to compression processing, and the pores of the polyimide film which is the holding body 622 are impregnated with the solid electrolyte 624 to hold the solid electrolyte 624.

Next, the laminated structure is housed in an exterior member.

Thus, the all-solid-state battery 200 is obtained.

Examples

Hereinafter, Examples will be described.

In the following description, all "parts" and "%" are based on mass unless otherwise specified.

<Preparation of Particle Dispersion Liquid>

(Preparation of PSt Particle Dispersion Liquid)

670 parts by mass of styrene, 12.1 parts by mass of a surfactant Dowfax2A1 (a 47% solution, manufactured by Dow Chemical Company), and 670 parts by mass of ion-exchanged water are mixed, and the mixture is stirred and emulsified at 1,500 rpm for 30 minutes with a dissolver to prepare a monomeric emulsion liquid.

To the reaction vessel, 1.10 parts by mass of Dowfax2A1 (a 47% solution, manufactured by Dow Chemical Company) and 1500 parts by mass of ion-exchanged water are charged. After heating to 75°C under a nitrogen stream, 70 parts by mass of the monomeric emulsion liquid is added, and then, a polymerization initiator solution in which 15 parts by mass of ammonium persulfate is dissolved in 98 parts by mass of ion-exchanged water is added dropwise over 10 minutes. After the dropwise addition, the mixture is allowed to react for 50 minutes, then the remaining monomeric emulsion liquid is added dropwise over 220 minutes, and the mixture is further reacted for 50 minutes, followed by cooling to obtain a PSt particle dispersion liquid. The average particle diameter of the resin particles is 0.81 μm.

<Example 1>

As a resin particle dispersion liquid (1), 128 g of ion-exchanged water is added to 39.21 g of the PSt particle dispersion liquid (particles: 16.04 g, ion-exchanged water: 23.17 g), to obtain a resin particle dispersion liquid in which the solid content concentration of the resin particles is adjusted to 9.6 mass%. To this resin particle dispersion liquid, 1.61 g (14.89 mmol) of p-phenylenediamine (molecular weight: 108.14), 0.24 g (1.20 mmol) of oxydianiline ether (molecular weight: 200.24), and 4.74 g (16.1 mmol) of 3,3',4,4'-biphenyltetracarboxylic dianhydride (molecular weight: 294.22) are added, and the mixture is stirred at 50°C for 10 minutes for dispersion. Then, a mixed solution containing 3.46 g (34.9 mmol) of N-methylpyrrolidone (organic amine compound), 2.93 g (29.0 mmol) of 4-methylmorpholine, and 22.40 g of ion-exchanged water is slowly added thereto, and the mixture is dissolved and reacted by stirring for 24 hours while maintaining the reaction temperature at 50°C, to obtain a polyimide precursor solution (PAA-1) in which resin particles are dispersed.

The polyimide precursor solution is coated onto a glass substrate having a thickness of 1.0 mm with an applicator in an area of 15 cm × 15 cm, and dried in an oven at 80°C for 20 minutes. Accordingly, a polyimide precursor film is obtained.

The gap of the applicator is adjusted such that the average value of the film thickness of the dried film after drying is 0.55 μm.

<Example 2>

A polyimide precursor film is obtained in the same manner as in Example 1 except that after coating the polyimide precursor solution, drying is performed in an oven at 80°C for 10 minutes, and then in an oven at 150°C for 10 minutes.

<Example 3>

A polyimide precursor film is obtained in the same manner as in Example 1 except that after coating the polyimide precursor solution, drying is performed in an oven at 80°C for 8 minutes.

<Example 4>

As a resin particle dispersion liquid (2), 68 g of ion-exchanged water is added to 98.03 g of the PSt particle dispersion liquid (particles: 40.09 g, ion-exchanged water: 57.94 g), to obtain a resin particle dispersion liquid. To this resin particle dispersion liquid, 2.42 g (22.4 mmol) of p-phenylenediamine, 0.36 g (1.8 mmol) of oxydianiline ether, and 7.12 g (24.2 mmol) of 3,3',4,4'-biphenyltetracarboxylic dianhydride are added, and the mixture is stirred at 50°C for 10 minutes for dispersion. Then, a mixed solution containing 5.20 g (52.5 mmol) of N-methylpyrrolidone, 4.41 g (43.6 mmol) of 4-methylmorpholine, and 14.39 g of ion-exchanged water is slowly added thereto, and the mixture is dissolved and reacted by stirring for 24 hours while maintaining the reaction temperature at 50°C, to obtain a polyimide precursor solution (PAA-2) in which resin particles are dispersed.

A polyimide precursor film is obtained in the same manner as in Example 1 except that the coating liquid is changed to PAA-2.

<Example 5>

To 20 g of PAA-1, 0.19 g (2.3 mmol) of 4-methylimidazole and 0.95 g (9.4 mmol) of 4-methylmorpholine are added with stirring, to obtain a polyimide precursor solution (PAA-3). A polyimide precursor film is obtained in the same manner as in Example 1 except that after coating PAA-3, drying is performed in an oven at 110°C for 20 minutes.

<Example 6>

To 20 g of PAA-1, 0.95 g (9.4 mmol) of 4-methylmorpholine and 19.05 g of ion-exchanged water are added with stirring, to obtain a polyimide precursor solution (PAA-4). A polyimide precursor film is obtained in the same manner as in Example 1 except that after coating PAA-4, drying is performed in an oven at 110°C for 10 minutes.

<Comparative Example 1>

A polyimide precursor film is obtained in the same manner as in Example 1 except that after coating the polyimide precursor solution, drying is performed in an oven at 80°C for 10 minutes, further in an oven at 150°C for 5 minutes, and in an oven at 200°C for 10 minutes.

<Comparative Example 2>

A polyimide precursor film is obtained in the same manner as in Example 1 except that after coating the polyimide precursor solution, drying is performed in an oven at 60°C for 8 minutes.

<Comparative Example 3>

A polyimide precursor film is obtained in the same manner as in Example 1 except that PAA-2 is used as a coating liquid, and after coating the polyimide precursor solution (PAA-2), drying is performed in an oven at 60°C for 10 minutes.

<Evaluation>

The following evaluation is carried out for the polyimide precursor film of each Example.

(Tensile Strength)

The tensile strength of the polyimide precursor film is measured by a tensile test according to ISO 527: 2012. Specifically, an ISO multipurpose test piece is prepared from the film, the test piece is placed on a universal test device (Autograph AG-Xplus, manufactured by Shimadzu Corporation), and a tensile test is performed to determine the tensile strength (KPa).

The tensile strength is not measured for the polyimide precursor film determined to have no self-supporting property.

(Self-supporting Property)

The self-supporting property evaluation is carried out as follows.

After the film is formed on a solid substrate, it is determined to have a self-supporting property when the film itself can be peeled off from the solid substrate while maintaining the shape thereof.

[Table 1]

| | Water | Solvent other than water | | | | Solvent | Mass ratio of water/solvent other than water | Particles | | Evaluation | |
|---|---|---|---|---|---|---|---|---|---|---|---|
| | Amount (mass%) | Type | Amount (mass%) | Type | Amount (mass%) | Total content (mass%) | | Particle diameter (nm) | Amount (mass%) in polyimide precursor film | Tensile strength (kPa) | Self-supporting property |
| Example 1 | 0 | 4-methylmorpholine | 12 | NMP | 12 | 24 | 0 | 810 | 51 | 9.8 | Yes |
| Example 2 | 0 | 4-methylmorpholine | 0 | NMP | 6.5 | 6.5 | 0 | 810 | 63 | 21.6 | Yes |
| Example 3 | 17.1 | 4-methylmorpholine | 11.1 | NMP | 10.4 | 38.6 | 0.8 | 810 | 41 | 6.6 | Yes |
| Example 4 | 25.6 | 4-methylmorpholine | 6.6 | NMP | 6.8 | 39 | 2 | 810 | 49 | 5.9 | Yes |
| Example 5 | 0 | 4-methylimidazole | 2 | NMP | 8 | 10 | 0 | 810 | 60 | 10.1 | Yes |
| Example 6 | 0 | 4-methylmorpholine | 12.2 | NMP | 17.8 | 30 | 0 | 810 | 36 | 7.2 | Yes |
| Comparative Example 1 | 0 | 4-methylmorpholine | 0 | NMP | 3.2 | 3.2 | 0 | 810 | 65 | - | No |
| Comparative Example 2 | 28.9 | 4-methylmorpholine | 9 | NMP | 9 | 46.9 | 2.6 | 810 | 36 | - | No |
| Comparative Example 3 | 33.5 | 4-methylmorpholine | 6.1 | NMP | 3.1 | 42.7 | 2.6 | 810 | 46 | - | No |

From the above results, it can be seen that the polyimide precursor film according to the invention has higher tensile strength, is less likely to be broken, and has a self-supporting property as compared with the polyimide precursor film of the comparative examples.

Accordingly, it can also be seen that a polyimide film having prevented breakage can be obtained from the polyimide precursor film according to the invention, as compared with the polyimide precursor film of the comparative examples.

## Claims

1. A polyimide precursor film, comprising:

   a polyimide precursor, wherein
   a total content of a solvent containing water and a solvent other than water in the polyimide precursor film is 5 mass% or more and 40 mass% or less and wherein the presence of water is optional, and
   a mass ratio of water to the solvent other than water in the polyimide precursor film is 0 or more and 2.5 or less, and wherein the solvent other than water contains a water-insoluble solvent and wherein the water-insoluble solvent is at least one selected from the group consisting of a secondary amine compound and a tertiary amine compound,
   and wherein the secondary amine compound and the tertiary amine compound are at least one selected from the group consisting of imidazoles represented by the following general formula (IM) and morpholines represented by the following general formula (MO),

   (IM)

   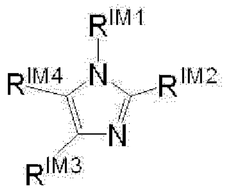

   (MO)

   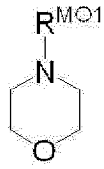

   wherein, in the general formula (IM), $R^{IM1}$, $R^{IM2}$, $R^{IM3}$, and $R^{IM4}$ each independently represent a hydrogen atom or an alkyl group having 1 or more and 8 or less carbon atoms, and
   in the general formula (MO), $R^{MO1}$ represents a hydrogen atom or an alkyl group having 1 or more and 8 or less carbon atoms,
   further comprising:

   particles, wherein
   the particles have a volume average particle diameter which is measured in accordance with the description of 0.1 μm or more and 1 μm or less, and
   a content of the particles is 30 mass% or more and 80 mass% or less with respect to a total amount of the polyimide precursor and the particles,
   and wherein the particles are resin particles.

2. The polyimide precursor film according to claim 1, wherein the total content of the solvent containing water and a solvent other than water in the polyimide precursor film is 8 mass% or more and 33 mass% or less.

3. The polyimide precursor film according to claim 1, wherein the mass ratio of water to the solvent other than water in the polyimide precursor film is 0 or more and 1.0 or less.

4. A method for producing a polyimide film, comprising:
   heating the polyimide precursor film according to any one of claims 1 to 3 to imidize the polyimide precursor to form the polyimide film.

5. A method for producing a polyimide film according to claim 4, further comprising:
   removing the particles.

## Patentansprüche

1. Polyimid-Vorläuferfolie, umfassend:

einen Polyimid-Vorläufer, wobei
ein Gesamtgehalt eines Lösungsmittels, das Wasser und ein von Wasser verschiedenes Lösungsmittel enthält, in der Polyimid-Vorläuferfolie 5 Masse-% oder mehr und 40 Masse-% oder weniger beträgt und wobei das Vorhandensein von Wasser optional ist, und ein Massenverhältnis von Wasser zu dem von Wasser verschiedenen Lösungsmittel in der Polyimid-Vorläuferfolie 0 oder mehr und 2,5 oder weniger beträgt,
und wobei das von Wasser verschiedene Lösungsmittel ein wasserunlösliches Lösungsmittel enthält und wobei das wasserunlösliche Lösungsmittel mindestens eines ist, das aus der Gruppe bestehend aus einer sekundären Aminverbindung und einer tertiären Aminverbindung ausgewählt ist,
und wobei die sekundäre Aminverbindung und die tertiäre Aminverbindung mindestens eine sind, die aus der Gruppe bestehend aus Imidazolen, dargestellt durch die folgende allgemeine Formel (IM) und Morpholinen, dargestellt durch die folgende allgemeine Formel (MO), ausgewählt ist,

(IM)

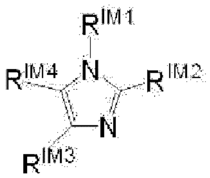

(MO)

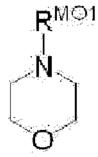

wobei in der allgemeinen Formel (IM) $R^{IM1}$, $R^{IM2}$, $R^{IM3}$ und $R^{IM4}$ jeweils unabhängig ein Wasserstoffatom oder eine Alkylgruppe mit 1 oder mehr und 8 oder weniger Kohlenstoffatomen darstellen, und in der allgemeinen Formel (MO) $R^{MO1}$ ein Wasserstoffatom oder eine Alkylgruppe mit 1 oder mehr und 8 oder weniger Kohlenstoffatomen darstellt,
ferner umfassend:

Partikel, wobei
die Partikel einen volumenmittleren Teilchendurchmesser, der gemäß der Beschreibung gemessen wird, von 0,1 μm oder mehr und 1 μm oder weniger aufweisen, und
ein Gehalt der Partikel 30 Masse-% oder mehr und 80 Masse-% oder weniger, bezogen auf eine Gesamtmenge des Polyimidvorläufers und der Partikel, beträgt,
und wobei die Partikel Harzpartikel sind.

2. Polyimid-Vorläuferfolie nach Anspruch 1, wobei der Gesamtgehalt des Lösungsmittels, das Wasser und ein von Wasser verschiedenes Lösungsmittel enthält, in der Polyimid-Vorläuferfolie 8 Masse-% oder mehr und 33 Masse-% oder weniger beträgt.

3. Polyimid-Vorläuferfolie nach Anspruch 1, wobei das Massenverhältnis von Wasser zu dem von Wasser verschiedenen Lösungsmittel, in der Polyimid-Vorläuferfolie 0 oder mehr und 1,0 oder weniger beträgt.

4. Verfahren zum Herstellen einer Polyimidfolie, umfassend:
Erwärmen der Polyimidvorläuferfolie nach einem der Ansprüche 1 bis 3, um die Polyimidvorläuferfolie zu imidieren, um die Polyimidfolie zu bilden.

5. Verfahren zum Herstellen einer Polyimidfolie nach Anspruch 4, ferner umfassend
Entfernen der Partikel.

## Revendications

1. Film précurseur de polyimide, comprenant :

un précurseur de polyimide, dans lequel

une teneur totale d'un solvant contenant de l'eau et d'un solvant autre que l'eau dans le film précurseur de polyimide est supérieure ou égale à 5 % en masse et inférieure ou égale à 40 % en masse et dans lequel la présence d'eau est facultative, et
un rapport massique de l'eau au solvant autre que l'eau dans le film précurseur de polyimide est supérieur ou égal à 0 et inférieur ou égal à 2,5,
et dans lequel le solvant autre que l'eau contient un solvant insoluble dans l'eau et dans lequel le solvant insoluble dans l'eau est au moins un choisi dans le groupe constitué d'un composé d'amine secondaire et d'un composé d'amine tertiaire, et dans lequel le composé d'amine secondaire et le composé d'amine tertiaire sont au moins un choisis parmi le groupe constitué d'imidazoles représentés par la formule générale suivante (IM) et des morpholines représentées par la formule générale suivante (MO),

(IM)

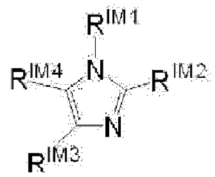

(MO)

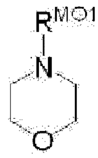

dans lequel, la formule générale (IM), $R^{IM1}$, $R^{IM2}$, $R^{IM3}$ et $R^{IM4}$ représentent chacun indépendamment un atome d'hydrogène ou un groupe alkyle présentant 1 ou plus et 8 ou moins atomes de carbone, et
dans la formule générale (MO), $R^{MO1}$ représente un atome d'hydrogène ou un groupe alkyle présentant 1 ou plus et 8 ou moins atomes de carbone,
comprenant en outre :

des particules, dans lequel
les particules présentent un diamètre de particule moyen en volume qui est mesuré conformément à la description de 0,1 μm ou plus et de 1 μm ou moins, et
une teneur des particules est supérieure ou égale à 30 % en masse et inférieure ou égale à 80 % en masse par rapport à une quantité totale du précurseur de polyimide et des particules, et dans lequel les particules sont des particules de résine.

**2.** Film précurseur de polyimide selon la revendication 1, dans lequel la teneur totale du solvant contenant de l'eau et d'un solvant autre que l'eau dans le film précurseur de polyimide est supérieure ou égale à 8 % en masse et inférieure ou égale à 33 % en masse.

**3.** Film précurseur de polyimide selon la revendication 1, dans lequel le rapport massique de l'eau au solvant autre que l'eau dans le film précurseur de polyimide est égal ou supérieur à 0 et inférieur ou égal à 1,0.

**4.** Procédé de fabrication d'un film de polyimide, comprenant :
le chauffage du film précurseur de polyimide selon l'une quelconque des revendications 1 à 3 pour imidiser le précurseur de polyimide pour former le film de polyimide.

**5.** Procédé de fabrication d'un film de polyimide selon la revendication 4, comprenant en outre :
l'élimination des particules.

*FIG.1*

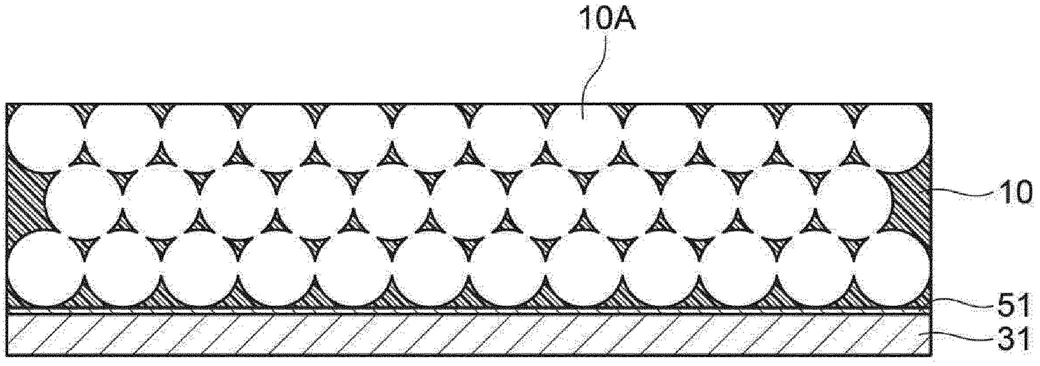

*FIG.2*

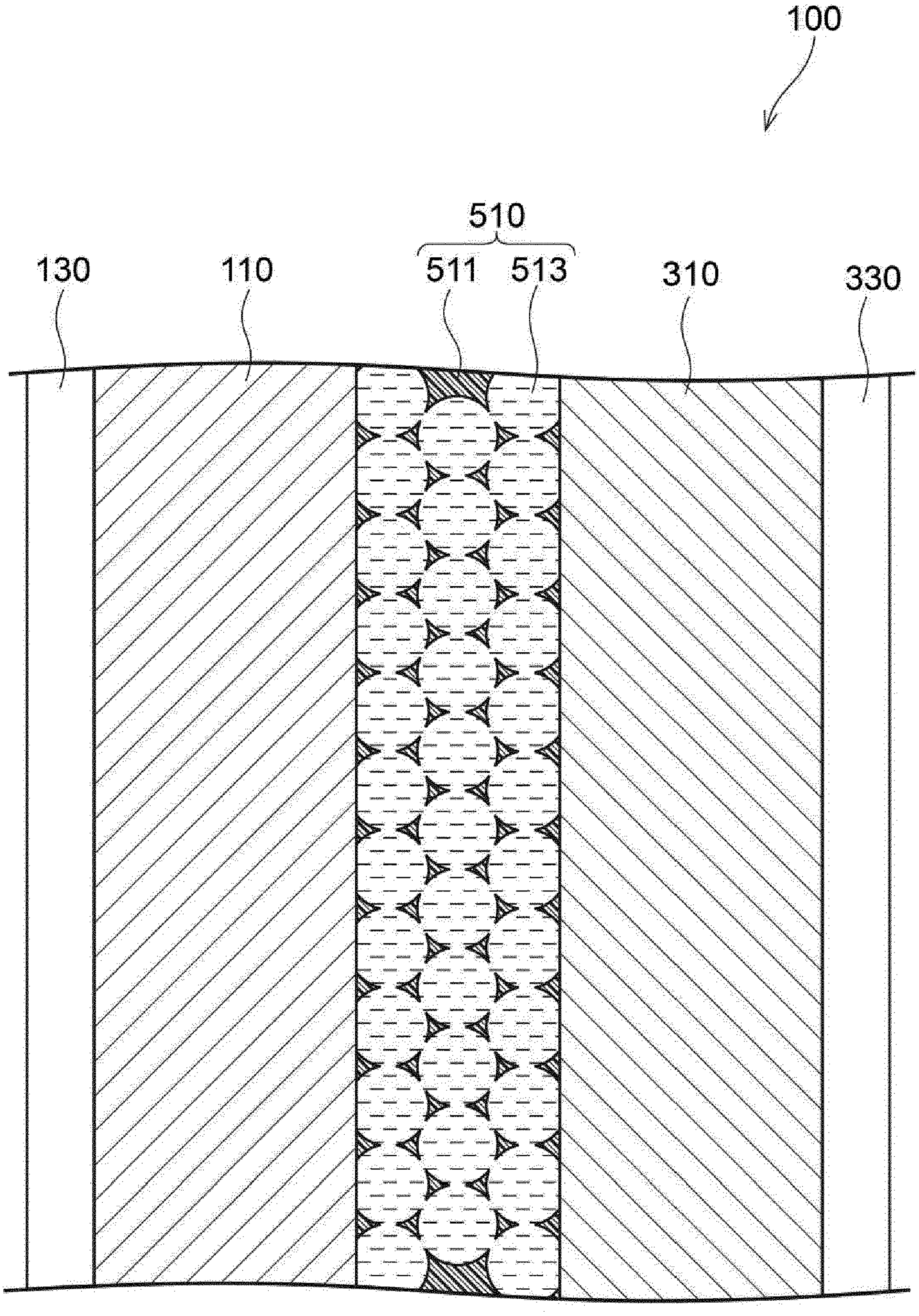

*FIG.3*

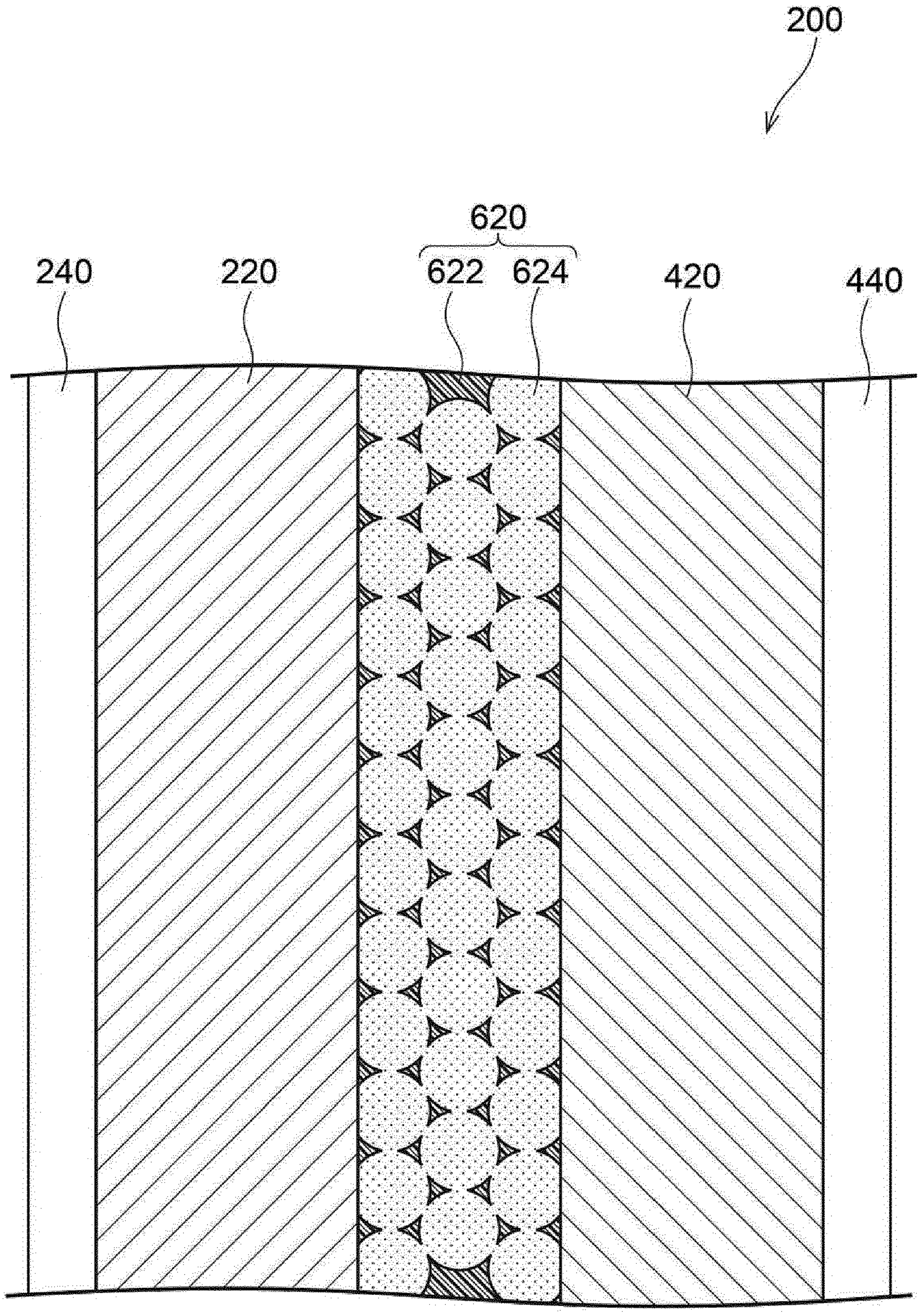

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009275090 A
- JP 2018058923 A
- JP 2015010107 A
- JP 2012025967 A
- JP 2012158149 A
- JP 2009006542 A
- JP 2006327022 A